# EUROPÄISCHE PATENTSCHRIFT

(11) **EP 1 386 810 B1**
(45) Veröffentlichungstag und Bekanntmachung des Hinweises auf die Patenterteilung: **04.05.2005**
(21) Anmeldenummer: 03016840.5
(22) Anmeldetag: 24.07.2003
(51) Int. Cl.: B60T 13/26, B60T 15/60, B60T 15/02

(54) **Kombiventil für Anhängefahrzeuge mit Feststellbremse**
Combined valve for trailer vehicles having a parking brake
Valve combiné pour remorques avec frein de stationnement

(30) Priorität: 03.08.2002 DE 10235707
(43) Veröffentlichungstag der Anmeldung: 04.02.2004
(73) Patentinhaber: Haldex Brake Products GmbH, 69123 Heidelberg (DE)
(72) Erfinder: Sulzyc, Georg, 69168 Wiesloch (DE)
(74) Vertreter: Rehberg Hüppe + Partner

(56) Entgegenhaltungen:
- DE-A- 3 011 604
- DE-A- 3 630 892
- DE-A- 19 818 982
- DE-A- 19 854 881
- GB-A- 1 572 439

## Beschreibung

Die vorliegende Erfindung betrifft ein Kombiventil für Anhängefahrzeuge mit einer Kombizylinder aufweisenden Feststellbremse, mit einem Gehäuse und einem darin dichtend und gleitend geführten Notbremskolben, der auf einer Stufungsfeder abgestützt ist und in dem ein Doppelventilkörper federnd aufgehängt ist, der mit einem Einlassventilsitz ein Einlassventil und mit einem Auslassventilsitz ein Auslassventil bildet, wobei der Notbremskolben auf seiner der Stufungsfeder abgekehrten Seite im Gehäuse eine an die Vorratsleitung anschließbare Notbremskammer abteilt, und mit einer am Kombiventil angeordneten Betätigungseinrichtung für die Funktionen Fahren und Parken des Anhängefahrzeugs. Unter einem solchen Kombiventil wird ein Steuerventil verstanden, welches auf Anhängefahrzeugen eingesetzt wird, die mit einer Feststellbremse ausgerüstet sind. Die Feststellbremse weist Kombizylinder auf, also Bremszylinder, die neben einem Betriebsbremsteil einen Federspeicherbremsteil besitzen, dessen Speicherfeder verantwortlich für die Einwirkung einer mechanischen Kraft bei eingelegter Feststellbremse ist.

Für auf Anhängefahrzeugen einzusetzende Bremsanlagen existieren eine Reihe von gesetzlichen Vorschriften, die erfüllt werden müssen. So muss beispielsweise sichergestellt sein, dass ein Absenken oder ein Absinken des Vorratsdruckes in der zum Anhängefahrzeug führenden Vorratsleitung zumindest bei Unterschreiten eines gewissen Druckwertes automatisch eine Notbremsung am Anhängefahrzeug auslöst. Ein bewusstes Absenken des Vorratsdruckes wird beim Abkuppeln des Anhängefahrzeugs von dem Zugfahrzeug herbeigeführt. Weiterhin muss ein Wiederbefüllen des Druckluftvorrates auf dem Anhänger verlässlich zu einem Lösen der Notbremse führen. Beim Ankuppeln des Anhängefahrzeugs an das Zugfahrzeug muss der ansteigende Druck das Kombiventil in Fahrstellung überführen, in der die Notbremse gelöst ist. Wenn ein Rangierbetrieb des Anhängefahrzeugs in abgekuppeltem Zustand ermöglicht sein soll, muss es möglich sein, die Notbremswirkung willkürlich herbeiführen bzw. aufheben zu können. Für den Zustand des Parkens muss schließlich eine Feststellbremse vorgesehen sein, die mechanisch auf die Bremsen einwirkt und das Anhängefahrzeug gegen ein Wegrollen schützt. Die Parkbremse soll auch in gekuppeltem Zustand zwischen Motorfahrzeug und Anhängefahrzeug einlegbar sein.

Die vorliegende Erfindung beschäftigt sich mit einem Kombiventil mit einer Betätigungseinrichtung, die das Erreichen der Funktionen zumindest für die Zustände Fahren und Parken des Anhängefahrzeugs gestattet. In Weiterbildung des Kombiventils kann dann auch zusätzlich die Betätigungseinrichtung die Funktion Rangieren des Anhängefahrzeugs ermöglichen.

### STAND DER TECHNIK

Ein Kombiventil der eingangs beschriebenen Art ist aus der DE 198 18 982 A1 bekannt. Es wird dort als Park- und Rangierventil bezeichnet, weil die dortige Betätigungseinrichtung nicht nur für die Funktionen Fahren und Parken, sondern zusätzlich noch zum Rangieren des Anhängefahrzeugs ausgebildet und angepasst ist. Das eigentliche Kombiventil weist ein Gehäuse auf, in dem ein Notbremskolben gleitend und dichtend geführt ist. Die wesentliche Dichtung des Notbremskolbens kann überströmbar ausgebildet sein, um den Luftbehälter auf dem Anhängefahrzeug mit Vorratsdruck aufzufüllen. Der Notbremskolben ist auf einer Stufungsfeder gehäuseseitig abgestützt, um ein allzu abruptes Einfallen einer Notbremsung zu verhindern. In dem Notbremskolben ist ein Doppelventilkörper abgedichtet geführt und federnd aufgehängt. Der Doppelventilkörper bildet mit einem am Notbremskolben ausgebildeten Einlassventilsitz ein Einlassventil. Weiterhin ist ein gehäusefester Auslassventilsitz vorgesehen, der zusammen mit dem Doppelventilkörper ein Auslassventil bildet, über welches eine Entlüftung in die Atmosphäre stattfindet. Der Notbremskolben teilt auf seiner der Stufungsfeder abgekehrten Seite eine Notbremskammer ab, die in dauernder Verbindung mit der Vorratsleitung auf dem Anhänger, also dem Kupplungskopf "Vorrat" steht. Seitlich an dem den Notbremskolben aufnehmenden Gehäuse ist eine Betätigungseinrichtung angeordnet. Diese Betätigungseinrichtung ist für die Funktionen Parken, Fahren und Rangieren ausgebildet. Wesentlicher Bestandteil dieser Betätigungseinrichtung ist ein Steuerschieber, also eine Stange, die hintereinander eine Mehrzahl von Dichtungen trägt, mit denen entsprechende Bohrungen im Gehäuse überfahrbar sind, um irgendwelche Leitungsverbindungen herzustellen bzw. abzusperren.

Die Steuerstange besitzt einen aus dem Griff herausgeführten Knauf oder Betätigungskopf, so dass sie hier manuell ergriffen und axial verschoben werden kann. Es sind insgesamt drei Stellungen vorgesehen, eine mittlere Ausgangsstellung, die dem Zustand Fahren entspricht. In einer ersten Verschieberichtung kann eine zweite Stellung angesteuert werden, die der Funktion Parken zugeordnet ist. In entgegengesetzter Verschieberichtung ist eine Stellung Rangieren ansteuerbar. Die Achse der Steuerstange und die Achse des Notbremskolbens mit dem Doppelventilkörper sind im Abstand und parallel zueinander angeordnet. Das Gehäuse der Betätigungseinrichtung ist auf irgendeine Weise mit dem Gehäuse des Teils verbunden, beispielsweise angeflanscht oder auch einstückig ausgebildet, in dem der Notbremskolben untergebracht ist. Der wesentliche Nachteil dieses bekannten Kombiventils ist darin zu sehen, dass deren beide Teile, nämlich der Teil, der den Notbremskolben aufnimmt, einerseits und der Teil, der die Steuerstange aufnimmt, andererseits, gleichsam nur nebeneinander angeordnet sind. Eine funktionsmäßige Integration der Elemente ist nicht vorgesehen. Es ergibt sich dadurch auch in nachteiliger Weise eine relativ große Baugröße, insbesondere der Schieberstange der Betätigungseinrichtung, verbunden mit einer relativ aufwändigen Herstellung. Weiterhin ist auch die Handhabung eines solchen Kombiventils nicht besonders einfach und sinnfällig. Es besteht die Gefahr, dass die Verschieberichtungen verwechselt werden, so dass Fehlbetätigungen nicht ausgeschlossen werden können.

Auch die DE 198 53 718 A1 beschäftigt sich mit einem Park- und Rangierventil für Anhängefahrzeuge mit einer Kombizylinder aufweisenden Feststellbremse. Auch dabei wird eine Notbremseinheit, wie sie an sich an Anhängerbremsventilen bekannt ist, in das Park- und Rangierventil verbracht. Diese Notbremseinheit weist einen Notbremskolben auf, der auf einer Stufungsfeder abgestützt ist und in dem ein Doppelventilkörper federnd und dichtend aufgehängt ist. Auch hier ist der Auslassventilsitz ortsfest angeordnet. Neben dieser Notbremseinheit ist eine Löseeinheit und als dritte Einheit eine Parkeinheit vorgesehen, wobei die drei Einheiten lediglich über Leitungen in Wirkverbindung stehen. Die Löseeinheit und die Parkeinheit sind beide separat voneinander manuell betätigbar. Beide Einheiten sind auch hier nach Schieberbauart, nicht nach Ventilbauart, ausgebildet. Es sind also zwei separat handhabbare Steuerstangen an den Einheiten vorgesehen, so dass auch hier neben einem entsprechenden baulichen Aufwand eine gewisse Kompliziertheit der Betätigung, verbunden mit der Gefahr von Fehlbetätigungen, die Folge sind. Die Feststellbremse kann in gekuppeltem Zustand des Anhängefahrzeugs wie auch in abgekuppeltem Zustand betätigt werden. Die Betätigungseinrichtungen sind so ausgebildet und angeordnet, dass sie sinnvoll für die Funktionen Fahren, Parken und Rangieren des Anhängefahrzeugs eingesetzt werden können. Über die Löseeinheit einerseits und die Parkeinheit andererseits können verschiedene Stellungen eingesteuert werden, deren Beibehaltung jedoch nicht sichergestellt ist. Damit besteht die Gefahr, dass während der Fahrt die eingestellte Stellung Fahrt durch einwirkende Stöße und/oder Schwingungen verlassen wird, so dass ungewollt ein Einlegen der Federspeicherbremse die Folge ist.

Aus der DE 37 03 536 ist eine Betätigungseinrichtung in Form eines pneumatisch rückstellbaren und von Hand in drei Stellungen überführbaren Umschaltventils bekannt, welches auf Anhängefahrzeugen eingesetzt wird, die mit einer Federspeicherbremse ausgestattet sind. Auch hier ist bereits der Notbremskolben des Anhängerbremsventils in das Umschaltventil transferiert. Der Notbremskolben teilt im Gehäuse eine Notbremskammer ab, die in dauernder Verbindung mit der Vorratsleitung auf dem Anhänger steht. Bei diesem Umschaltventil ist eine manuell in drei Stellungen verschiebbare Steuerstange koaxial zur Achse des Notbremskolbens vorgesehen, freilich in der Ausbildung als Schieberstange. Der Schieberstange ist eine Verriegelungseinrichtung zugeordnet, die zur Verriegelung der Stellung Parken genutzt wird.

### AUFGABE DER ERFINDUNG

Der vorliegenden Erfindung liegt die Aufgabe zugrunde, ein Kombiventil der eingangs beschriebenen Art bereitzustellen, welches bei einfachem Aufbau das willkürliche Lösen und Festbremsen des Anhängefahrzeugs zumindest in angekuppeltem Zustand zwischen Motorfahrzeug und Anhängefahrzeug ermöglicht und bei dem die Gefahr von Fehlbetätigungen reduziert ist.

### LÖSUNG

Dies wird bei einem Kombiventil der eingangs beschriebenen Art erfindungsgemäß dadurch erreicht, dass der Auslassventilsitz zum willkürlichen Be- und Entlüften der Kombizylinder an einer in Ventilbauart ausgebildeten Steuerstange angeordnet ist, die als wesentlicher Bestandteil der Betätigungseinrichtung im Gehäuse koaxial zum Notbremskolben verschiebbar und dichtend geführt ist.

### BESCHREIBUNG DER ERFINDUNG

Die Erfindung geht von der Vorstellung aus, den im Stand der Technik ortsfesten Auslassventilsitz axial beweglich zu machen und am einen Ende einer hohlen Steuerstange anzuordnen, die zugleich manuell axial verschoben werden kann, um damit zumindest die Funktionen "Fahren" und "Parken" des Anhängefahrzeugs abzudecken. Die Steuerstange selbst wird dabei nicht mehr in Schieberbauart, sondern jetzt in Ventilbauart ausgebildet. Sie wird hohl gestaltet, um damit zugleich eine Möglichkeit der Entlüftung in die Atmosphäre bereitzustellen. Die Achsen der Steuerstange und des Notbremskolbens sind koaxial fluchtend zueinander angeordnet, so dass damit eine bauliche Integration stattfindet. Da die Steuerstange zunächst nur so ausgebildet sein muss, dass sie zwei Stellungen einnehmen kann, ist die manuelle Betätigung vereinfacht, wodurch die Sicherheit in der Betätigung erhöht wird. Da eine gesetzliche Vorschrift betreffend eine Rangiermöglichkeit nicht besteht, wird in dieser einfachsten Ausführungsform hierauf grundsätzlich bewusst verzichtet. Wenn jedoch die Steuerstange bewusst in der gedrückten Stellung gehalten wird, wird die Federspeicherbremse gelöst und es ist ein Rangieren möglich.

Insbesondere sollte die Steuerstange in mindestens zwei Stellungen axial verschiebbar angeordnet sein, von denen die erste Stellung bei gelöster Feststellbremse dem Zustand "Fahrt" und die zweite Stellung bei eingelegter Feststellbremse dem Zustand "Parken" zugeordnet sind, wobei mindestens eine Verriegelungseinrichtung für die Sicherung der Beibehaltung jeder der beiden Stellungen vorgesehen ist. Eine solche Verriegelungseinrichtung oder mehrere solche Verriegelungseinrichtungen können in vielfacher Weise realisiert werden, beispielsweise durch Kugelverrastungen, durch den Einbau von zu überwindenden Kraftschwellen, durch bewusste Erhöhung der Reibung u. dgl..

Sinnvoll ist es auch, wenn die Steuerstange drei Stellungen einnehmen kann, wobei der mittleren Stellung die Stellung Fahrt zugeordnet ist, während die beiden anderen Stellungen für Rangieren und für Parken jeweils am Ende des Bewegungshubes angeordnet sind. In Verbindung damit sollte die Verriegelungseinrichtung dann so ausgebildet sein, dass sie durch manuelles Betätigen und/oder durch den pneumatischen Druck in der Vorratsleitung nach dem Wiederankuppeln von der Stellung Rangieren in die Stellung Fahrt entsperrbar und die Steuerstange in die Stellung Fahrt zurückverschiebbar ist. Damit sind dann alle Anforderungen an ein Kombiventil für eine derartige Feststellbremse auf einem Anhängefahrzeug erfüllt. Vorteilhaft ist nur ein einziger Handgriff bzw. eine einzige Steuerstange für die Betätigung vorgesehen. Der bauliche Aufwand eines solchen Kombiventils ist gegenüber bekannten Ausführungen erheblich reduziert.

Der im Notbremskolben aufgehängte Doppelventilkörper kann durchbrochen ausgebildet sein, um einen Raum, dessen Volumen sich bei Betätigung verändert, dauernd an die Atmosphäre anzuschließen. In Verbindung damit kann das Kombiventil auch einen Rückführkolben aufweisen, der eine durch den durchbrochenen Doppelventilkörper hindurchreichende Kolbenstange trägt, die die Steuerstange aus der Stellung Rangieren in die Stellung Fahrt zurückführt, wenn der Rückführkolben pneumatisch beaufschlagt wird. Eine solche pneumatische Beaufschlagung findet regelmäßig dann statt, wenn der Kupplungskopf "Vorrat" zwischen Anhängefahrzeug und Zugfahrzeug angeschlossen wird. Diese Rückstellung erfolgt also automatisch. Auch ein Rückführen von Hand ist möglich.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform des Kombiventils in der Stellung Fahrt,
- **Fig. 2**: zeigt das Kombiventil gemäß Fig. 1 in der Stellung Parken,
- **Fig. 3**: zeigt das Kombiventil gemäß den Fig. 1 und 2 in einer Stellung, in der eine Notbremsung stattfindet,
- **Fig. 4**: zeigt ein weiteres Ausführungsbeispiel des Kombiventils, welches zusätzlich für die Funktion Rangieren ausgebildet ist,
- **Fig. 5**: zeigt eine weitere Ausführungsform des Kombiventils, welches zusätzlich die Betätigung eines Betriebsbremsteils ermöglicht, und
- **Fig. 6**: zeigt das Kombiventil gemäß den Fig. 1 bis 3 in Verbindung mit einem angeflanschten Rangierventil.

### FIGURENBESCHREIBUNG

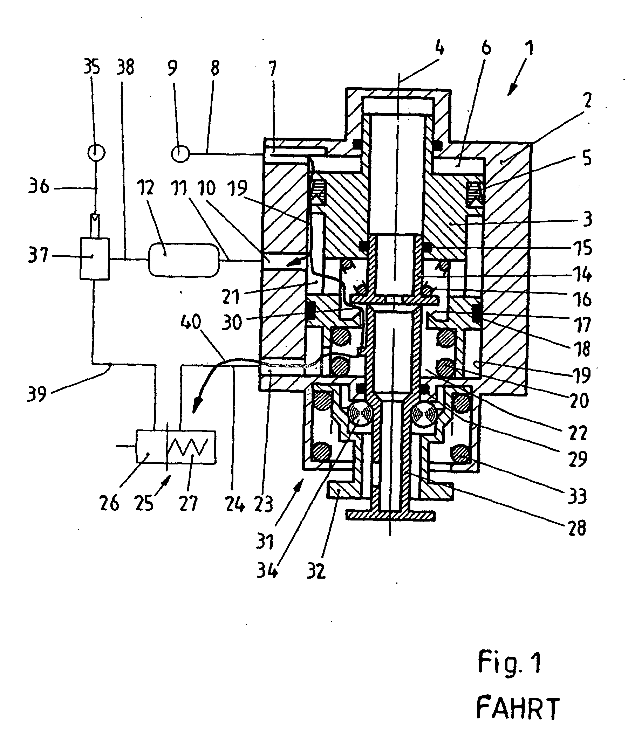

In **Fig. 1** ist anhand eines Längsschnitts ein Kombiventil 1 in einer ersten Ausführungsform verdeutlicht. Das Kombiventil 1 weist ein Gehäuse 2 auf, in welchem ein Notbremskolben 3 mit seiner Achse 4 angeordnet ist. Der Notbremskolben 3 ist durchbrochen ausgebildet und besitzt eine in einer Richtung überströmbare Dichtung 5. Der Notbremskolben 3 teilt im Gehäuse eine Notbremskammer 6 ab. Die Notbremskammer 6 steht in Verbindung mit einem Anschluss 7 am Gehäuse 2, zu dem eine Vorratsleitung 8 von einem Kupplungskopf "Vorrat" 9 auf dem Anhängefahrzeug herangeführt ist.

Am Gehäuse 2 ist ein weiterer Anschluss 10 verwirklicht, von dem eine Leitung 11 zu einem Vorratsbehälter 12 auf dem Anhänger führt. Gemäß der Strömungsrichtung durch Pfeil 13 gelangt Vorratsluft aus der Vorratsleitung 8 in den Vorratsbehälter 12, so dass dieser aufgefüllt werden kann. Es versteht sich, dass anstelle der in einer Richtung überströmbaren Dichtung 5 auch eine direkte Verbindungsleitung zwischen der Vorratsleitung 8 und der Leitung 11 mit Einschaltung eines entsprechenden Rückschlagventils vorgesehen sein könnte.

In dem durchbrochen ausgebildeten Notbremskolben 3 ist ein Doppelventilkörper 14 federnd und dichtend geführt. Hierzu ist eine Dichtung 15 und eine Feder 16 vorgesehen. Der Doppelventilkörper 14 ist auch hohl bzw. durchbrochen ausgebildet.

Am Notbremskolben 3 ist ein Einlassventilsitz 17 gebildet, der mit dem Doppelventilkörper 14 ein Einlassventil 14, 17 darstellt. Der Notbremskolben 3 besitzt in diesem Bereich außen eine Dichtung 18, mit der er in einer Bohrung 19 im Gehäuse 2 abgedichtet geführt ist. Der Notbremskolben 3 ist auf einer Stufungsfeder 20 abgestützt, die gehäuseseitig gelagert ist. Auf diese Weise ist im Gehäuse 2 in Verbindung mit dem Notbremskolben 3 eine Verbindungskammer 21 oberhalb des Einlassventils 14, 17 und eine Ausströmkammer 22 unterhalb des Einlassventils 14, 17 gebildet. Die Ausströmkammer 22 hat Verbindung zu einem Anschluss 23, von dem eine Leitung 24 zu in der Regel mehreren Kombizylindern 25 und führt. Jeder Kombizylinder 25 weist einen Betriebsbremsteil 26 und einen Federspeicherteil 27 auf. Es ist erkennbar, dass die Leitung 24 an dem Federspeicherteil 27 angeschlossen ist, in welchem in bekannter Weise bei Belüftung die Speicherfeder gespannt und damit die Feststellbremse gelöst wird.

Im Gehäuse 2 des Kombiventils ist eine zu Zwecken der Entlüftung hohl ausgebildete Steuerstange 28 gleitend und dichtend geführt. Zu diesem Zweck ist eine Dichtung 29 vorgesehen. Am freien, in das Gehäuse 2 hineinreichenden Ende der Steuerstange 28 ist ein Auslassventilsitz 30 ausgeformt, der mit dem Doppelventilkörper 14 ein Auslassventil 14, 30 bildet. Die Steuerstange 28 ist koaxial zu der Achse des Notbremskolbens 3 angeordnet und in Richtung dieser Achse 4 in zwei unterschiedliche Stellungen manuell verschiebbar. In Fig. 1 ist die eingedrückte Stellung der Steuerstange 28 dargestellt, in der das Auslassventil 14, 30 geschlossen und das Einlassventil 14, 17 geöffnet ist.

Der verschiebbaren Steuerstange 28 ist eine Verriegelungseinrichtung 31 zugeordnet. Die Verriegelungseinrichtung 31 kann in verschiedener Weise realisiert werden und auch so ausgebildet sein, dass sie die eine und/oder andere Stellung der Steuerstange 28 zu verriegeln gestattet. In der gezeigten Ausführungsform besitzt die Verriegelungseinrichtung 31 eine Schiebehülse 32, die manuell entgegen der Kraft einer Feder 33 betätigbar ist. Weiterhin sind Kugeln 34 vorgesehen, die in Verbindung mit entsprechenden Hinterschneidungen wirksam werden. Die Ausbildung der Verriegelungseinrichtung 31 kann auch so ausgeführt sein, dass sie überwindbare Kraftschwellen zur Verfügung stellt.

Das Kombiventil 1 wird innerhalb einer Bremsanlage eingesetzt, die auch einen Kupplungskopf "Bremse" 35 aufweist, von dem eine Bremsleitung 36 zu einem Relaisventil 37, beispielsweise in der Ausbildung als ABS- oder EBS-Ventil, herangeführt ist. Das Relaisventil 37 wird über eine Leitung 38 aus dem Vorratsbehälter 12 mit Vorratsluft versorgt. Eine Steuerleitung 39 führt vom Relaisventil 37 zu dem Betriebsbremsteil 26.

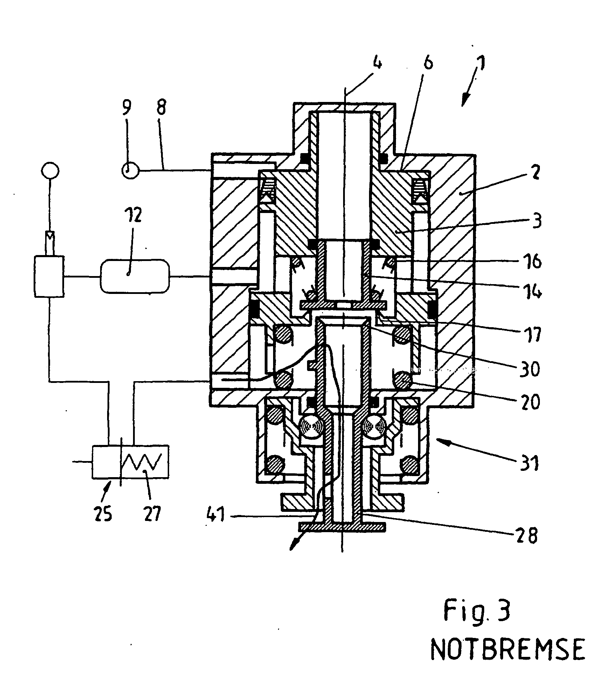

In Fig. 1 ist die Relativlage der Teile dargestellt, die der Stellung "Fahrt" entspricht. Das Anhängefahrzeug ist mit dem Zugfahrzeug gekuppelt, so dass die entsprechenden Kupplungsköpfe miteinander verbunden sind. Infolgedessen steht in der Vorratsleitung 8 der Vorratsdruck an, über welchen gemäß Pfeil 13 der Vorratsbehälter 12 mit Druckluft aufgefüllt wird. Die Bremsleitung 36 ist entlüftet. Der Kombizylinder 25 befindet sich in einer Stellung, in der die Feststellbremse eingelegt ist. Dies entspricht in etwa auch der Stellung gemäß Fig. 3.

Mit ansteigendem Vorratsdruck und dem Befüllen des Vorratsbehälters 12 wird auch der Druck in der Notbremskammer 6 ansteigen. Sobald die dadurch auf den Notbremskolben 3 ausgeübte Kraft in der Lage ist, die Kraft der Stufungsfeder 20 zu überwinden, wird sich der Notbremskolben aus Fig. 3 nach unten in Bewegung setzen, wobei zunächst das Auslassventil 14, 30 geschlossen und in der Folge das Einlassventil 14, 17 geöffnet wird. Damit wird die Entlüftung des Federspeicherteils 27 des Kombizylinders 25 beendet und Druckluft strömt gemäß Pfeil 40 über das geöffnete Einlassventil in den Federspeicherteil 27, so dass die Feststellbremse gelöst wird. Damit kann die Fahrt des Lastzugs beginnen.

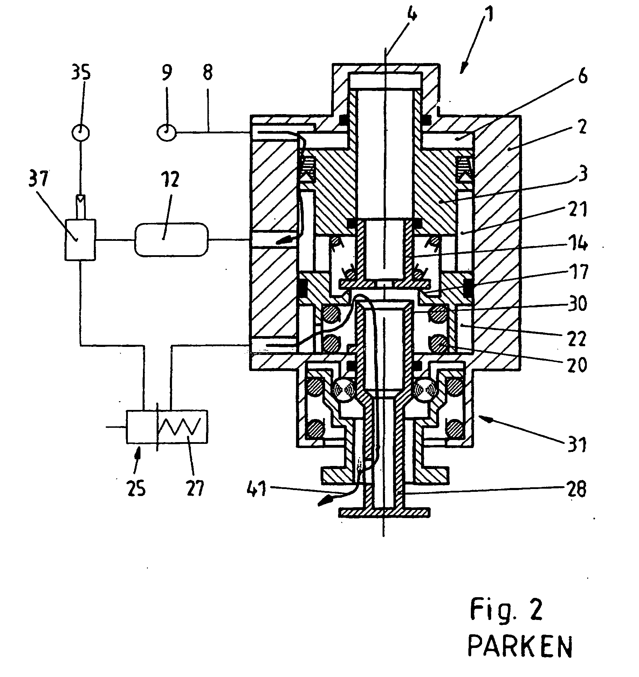

**Fig. 2** zeigt die Relativlage der Teile in der Stellung Parken, also in angekuppeltem Zustand des Anhängefahrzeugs. Gemäß Pfeil 13 kann der Vorratsbehälter 12 weiterhin mit Druckluft versorgt werden. Die Steuerstange 28 wird manuell aus der in Fig. 1 dargestellten Stellung aus dem Gehäuse 2 um den möglichen Hub herausgezogen, so dass das Einlassventil 14, 17 geschlossen und in der Folge das Auslassventil 14, 30 geöffnet wird. Damit kann Druckluft aus dem Federspeicherteil 27 des Kombizylinders 25 gemäß Pfeil 41 über das geöffnete Auslassventil 14, 30 in die Atmosphäre entweichen. Die Speicherfeder des Federspeicherteils 27 zieht die Feststellbremse an.

Sofern ein Rangieren gewünscht wird, ergibt sich die Möglichkeit, die Steuerstange 28 aus der in Fig. 2 dargestellten einen Stellung (eingelegte Feststellbremse) in ihre andere Stellung (Fig. 1) in das Gehäuse 2 hineinzudrücken und eingedrückt zu halten. Damit wird das Auslassventil 14, 30 geschlossen und in der Folge das Einlassventil 14, 17 geöffnet. Falls in dem Druckluftvorratsbehälter 12 hinreichend Druckluft vorhanden ist, wird diese nunmehr zu dem Kombizylinder 25 geleitet und damit die Federspeicherbremse gelöst. Dies gilt für das gekuppelte Anhängefahrzeug wie auch für das abgekuppelte Anhängefahrzeug. Es besteht freilich die Schwierigkeit, die Steuerstange 28 während des Rangierens eingedrückt zu halten. Durch Herausziehen der Steuerstange 28 in die in Fig. 2 dargestellte Stellung kann jederzeit wiederum die Feststellbremse eingelegt werden.

**Fig. 3** zeigt eine Notbremssituation, wie sie bei einer Entlüftung der Vorratsleitung 8 oder einem Abriss eintritt. Die Notbremskammer 6 wird entlüftet und der Notbremskolben 3 bewegt sich infolge der Kraft der Stufungsfeder 20 nach oben, so dass das Einlassventil 14, 17 geschlossen und in der Folge das Auslassventil 14, 30 geöffnet wird. Auch damit ist eine Entlüftung des Federspeicherteils 27 des Kombizylinders 25 gemäß Pfeil 41 möglich.

Wird das Anhängefahrzeug an das Zugfahrzeug angekuppelt, also die Vorratsleitung 8 belüftet, so wird das Kombiventil aus der Stellung gemäß Fig. 3 in die Stellung gemäß Fig. 1 überführt. Dies geschieht automatisch.

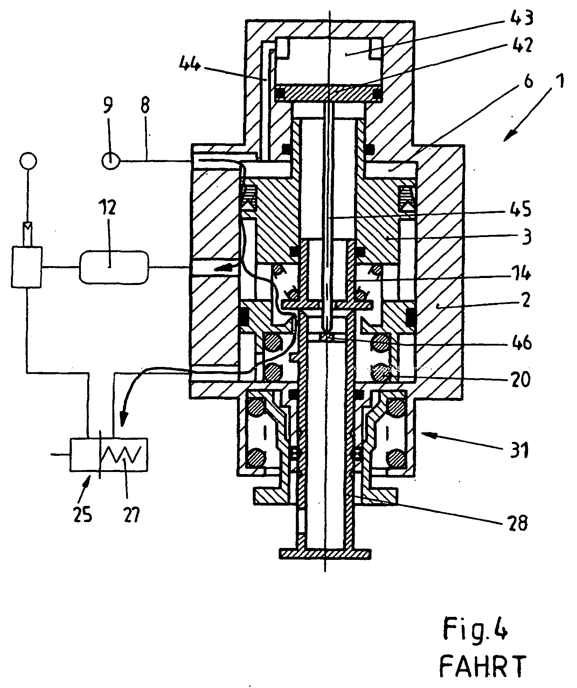

**Fig. 4** zeigt eine weitere Ausführungsform des Kombiventils 1, welches grundsätzlich auf der Ausführungsform der Fig. 1 bis 3 aufbaut. Die Steuerstange 28 ist hier jedoch nicht nur in zwei Stellungen, sondern in drei Stellungen axial verschiebbar. Die mittlere Stellung wird der Stellung Fahrt zugeordnet. Eine weitere eingedrückte Stellung der Steuerstange 28 ist für die Stellung Rangieren vorgesehen, während eine Herausziehbewegung der Steuerstange 28 letztlich in der anderen Endstellung zu einer Stellung führt, die der Stellung Parken zugeordnet ist. Demgemäß ist auch die Verriegelungseinrichtung 31 so ausgebildet, dass bevorzugt alle drei Stellungen verriegelt werden können.

Zusätzlich zu den sonstigen oben bereits beschriebenen Einzelteilen und Elementen ist im Gehäuse 2 des Kombiventils 1 ein Rückführkolben 42 beispielsweise oberhalb des Notbremskolbens 3 angeordnet und im Gehäuse 2 dichtend und axialverschieblich geführt. Der Rückführkolben 42 teilt im Gehäuse 2 eine Rückführkammer 43 ab, die über eine Leitung 44 in dauernder Verbindung zu der Notbremskammer 6 bzw. der Vorratsleitung 8 steht. Der Rückführkolben 42 weist eine Kolbenstange 45 auf, die durch den durchbrochenen Notbremskolben 3, den hohlen Doppelventilkörper 14 bis in die hohl ausgebildete Steuerstange 28 hinabreicht, die hier mit einem Anschlag 46 versehen ist, der mit der Kolbenstange 45 zusammenarbeitet.

Wird in abgekuppeltem Zustand des Anhängefahrzeugs, also bei entlüfteter Vorratsleitung 8, ein Rangiervorgang eingeleitet, so wird die Steuerstange 28 in das Gehäuse 2 in ihrer eine Endstellung eingeschoben, wodurch das Auslassventil 14, 30 geschlossen und nachfolgend das Einlassventil 14, 17 geöffnet wird. Damit wird der Federspeicher 27 des Kombizylinders 25 belüftet und damit die Feststellbremse gelöst. Wenn nun vor Antritt einer Fahrt vergessen wird, die Steuerstange 28 wiederum in ihre Mittelstellung entsprechend der Stellung Fahrt manuell zurückzuführen, so führt ein Kupplungsvorgang zwischen Anhängefahrzeug und Zugfahrzeug dazu, dass in der Vorratsleitung 8 wiederum Druck entsteht, der sich insoweit in die Rückführkammer 43 fortpflanzt, so dass die Kolbenstange 45 durch Anschlagen an dem Anschlag 46 die Steuerstange 28 automatisch in die Stellung Fahrt zurückführt.

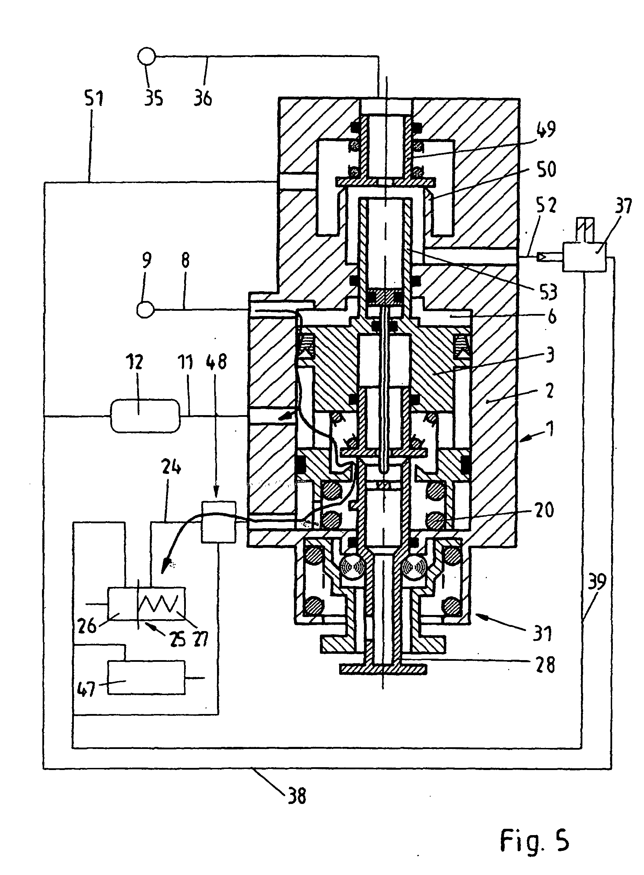

In **Fig. 5** ist eine weitere Ausführungsform des Kombiventils 1 dargestellt. Fig. 5 dient zur Verdeutlichung, dass das Kombiventil 1 in seiner grundsätzlichen Bauart mit geringfügiger Abänderung auch dann eingesetzt werden kann, wenn nicht nur auf den Federspeicherteil 27, sondern auch auf den Betriebsbremsteil 26 sowie auf gesondert vorgesehene Betriebsbremszylinder 47 Einfluss genommen werden soll. In der Leitung 24 ist ein Zweiwegeventil 48 vorgesehen, welches grundsätzlich an dieser Stelle auch bei allen anderen Ausführungsformen eingesetzt werden kann. Das Gehäuse 2 des Kombiventils ist hier nach oben verlängert oder mit einem Aufsatz versehen, in dem ein weiterer hohler Doppelventilkörper 49 federnd und dichtend aufgehängt ist. Der Doppelventilkörper 49 bildet mit einem gehäusefesten Sitz 50 ein Durchlassventil 49, 50 für Vorratsluft aus dem Vorratsbehälter 12 über eine Leitung 51 und letztlich eine Steuerleitung 52 zu dem Relaisventil 37, welches im Übrigen auch durch eine ABS- oder EBS-Einrichtung ansteuerbar ist. Der Notbremskolben 3 besitzt dem Doppelventilkörper 49 zugekehrt einen Fortsatz 53, der ähnlich wie ein Auslassventilsitz endet und zur Betätigung des Doppelventilkörpers 49 dient. Der Doppelventilkörper 49 ist grundsätzlich hohl ausgebildet, damit auch über die Bremsleitung 36 ein Signal an das Relaisventil 37 durchgesteuert werden kann.

Beim Abkuppeln der Vorratsleitung 8 bzw. beim Eintreten einer Leckage in diesem Bereich wird die Notbremskammer 6 entsprechend entlüftet, so dass der Notbremskolben 3 durch die Kraft der Stufungsfeder 20 angehoben wird. Dabei setzt der Fortsatz 53 an dem Doppelventilkörper 49 auf und öffnet das Durchlassventil 49, 50, so dass Vorratsluft aus dem Vorratsbehälter 12 als Steuerluft zu dem Relaisventil 37 gelangt. Das Relaisventil 37 wird über die Leitung 38 mit Vorratsluft versorgt, so dass nunmehr über die Leitung 39 Druckluft ausgesteuert wird, die sowohl in den Betriebsbremsteil 26 des Kombizylinders 25 wie auch in den gesonderten Betriebsbremszylinder 47 geschickt wird. Damit werden auch die Betriebsbremszylinder 47 zusätzlich zu den Kombizylindern 25 für eine hohe Abbremsung genutzt.

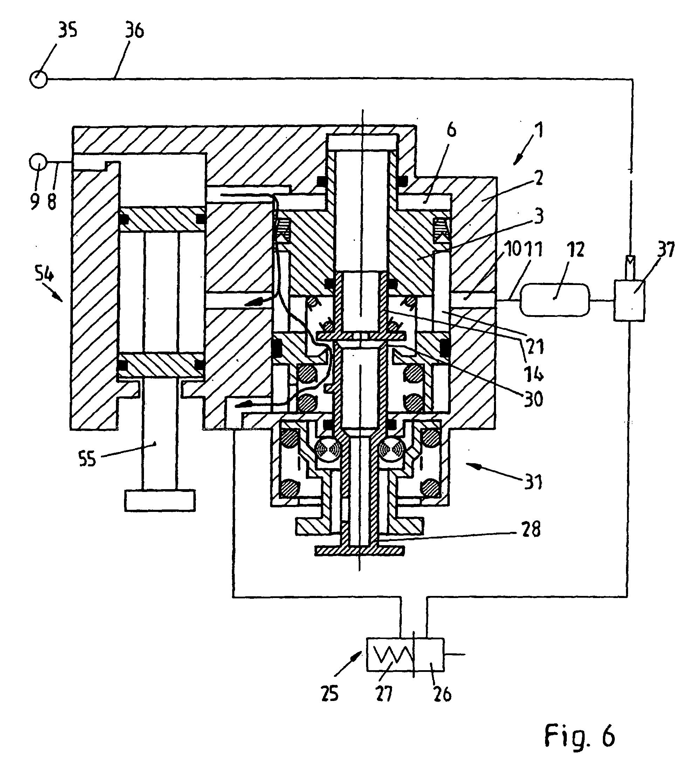

Die Ausführungsform des Kombiventils 1 gemäß **Fig. 6** baut zunächst auf der Ausführungsform gemäß Fig. 1 bis 3 auf, weshalb auf die dortige Beschreibung verwiesen werden kann. Angeflanscht an dem Gehäuse 2 des Kombiventils 1 ist ein Rangierventil 54 vorgesehen, welches einen Steuerschieber 55 besitzt, der in zwei Stellungen verbringbar ist. Der Steuerschieber 55 ist in der Stellung Fahrt dargestellt, bei der er keine Funktion hat. Aus den vorangehenden Beschreibungen ist erkennbar, dass beim Abkuppeln des Anhängefahrzeugs die Vorratsleitung 8 drucklos wird, so dass die Notbremskammer 6 entlüftet wird. Damit wird der Notbremskolben 3 eine Stellung einnehmen, wie sie anhand der Fig. 3 verdeutlicht wurde. Der Federspeicherteil 27 des Kombizylinders 25 wird entlüftet und die Feststellbremse ist eingelegt. Soll nun in dieser abgekuppelten Stellung ein Rangierbetrieb durchgeführt werden, so wird der Steuerschieber 55 des Rangierventils 54 eingedrückt, so dass in der ersichtlichen Weise Druckluft aus dem Vorratsbehälter 12 über die Verbindungskammer 21 in das Rangierventil 54 zwischen seinen beiden Dichtungen gelangen kann, die infolge der eingedrückten Stellung dann in die Notbremskammer 6 geleitet wird, so dass das Einlassventil 14, 17 geöffnet und damit der Federspeicherteil 27 wieder belüftet, also die Feststellbremse gelöst wird. Wenn der Rangierbetrieb beendet werden soll, wird der Steuerschieber 55 wieder herausgezogen, so dass die Notbremskammer 6 über die entlüftete Vorratsleitung 8 entlüftet wird und wiederum das Einlegen der Feststellbremse erfolgt. Auch hier wird der Steuerschieber 55 des Rangierventils 54 beim Ankuppeln des Anhängefahrzeugs und dem Auftreten von Druck in der Vorratsleitung 8 wiederum in seine Ausgangsstellung gemäß Fig. 6 zurückgeführt.

### BEZUGSZEICHENLISTE

- 01: Kombiventil
- 02: Gehäuse
- 03: Notbremskolben
- 04: Achse
- 05: Dichtung
- 06: Notbremskammer
- 07: Anschluss
- 08: Vorratsleitung
- 09: Kupplungskopf "Vorrat"
- 10: Anschluss

- 11: Leitung
- 12: Vorratsbehälter
- 13: Pfeil
- 14: Doppelventilkörper
- 15: Dichtung
- 16: Feder
- 17: Einlassventilsitz
- 18: Dichtung
- 19: Bohrung
- 20: Stufungsfeder

- 21: Verbindungskammer
- 22: Ausströmkammer
- 23: Anschluss
- 24: Leitung
- 25: Kombizylinder
- 26: Betriebsbremsteil
- 27: Federspeicherteil
- 28: Steuerstange
- 29: Dichtung
- 30: Auslassventilsitz

- 31: Verriegelungseinrichtung
- 32: Schiebehülse
- 33: Feder
- 34: Kugel
- 35: Kupplungskopf "Bremse"
- 36: Bremsleitung
- 37: Relaisventil
- 38: Leitung
- 39: Leitung
- 40: Pfeil

- 41: Pfeil
- 42: Rückführkolben
- 43: Rückführkammer
- 44: Leitung
- 45: Kolbenstange
- 46: Anschlag
- 47: Betriebsbremszylinder
- 48: Zweiwegeventil
- 49: Doppelventilkörper
- 50: gehäusefester Sitz

- 51: Leitung
- 52: Steuerleitung
- 53: Fortsatz
- 54: Rangierventil
- 55: Steuerschieber

## Patentansprüche

1. Kombiventil (1) für Anhängefahrzeuge mit einer Kombizylinder (25) aufweisenden Feststellbremse, mit einem Gehäuse (2) und einem darin dichtend und gleitend geführten Notbremskolben (3), der auf einer Stufungsfeder (20) abgestützt ist und in dem ein Doppelventilkörper (14) federnd aufgehängt ist, der mit einem Einlassventilsitz (17) ein Einlassventil (14, 17) und mit einem Auslassventilsitz (30) ein Auslassventil (14, 30) bildet, wobei der Notbremskolben (3) auf seiner der Stufungsfeder (20) abgekehrten Seite im Gehäuse (20) eine an die Vorratsleitung (8) anschließbare Notbremskammer (6) abteilt, und mit einer am Kombiventil (1) angeordneten Betätigungseinrichtung für die Funktionen "Fahren" und "Parken" des Anhängefahrzeugs **dadurch gekennzeichnet, dass** der Auslassventilsitz (30) zum willkürlichen Be- und Entlüften der Kombizylinder (25) an einer in Ventilbauart ausgebildeten Steuerstange (28) angeordnet ist, die als wesentlicher Bestandteil der Betätigungseinrichtung im Gehäuse (2) koaxial zum Notbremskolben (3) verschiebbar und dichtend geführt ist.

2. Kombiventil (1) nach Anspruch 1, **dadurch gekennzeichnet, dass** die Steuerstange (28) in mindestens zwei Stellungen axial verschiebbar angeordnet ist, von denen die erste Stellung bei gelöster Feststellbremse dem Zustand "Fahrt" und die zweite Stellung bei eingelegter Feststellbremse dem Zustand "Parken" zugeordnet sind, wobei mindestens eine Verriegelungseinrichtung (31) für die Sicherung der Beibehaltung jeder der beiden Stellungen vorgesehen ist.

3. Kombiventil (1) nach Anspruch 2, **dadurch gekennzeichnet, dass** die Verriegelungseinrichtung (31) durch manuelle Betätigung und/oder den pneumatischen Druck in der Vorratsleitung (8) nach dem Wiederankuppeln von der Stellung "Rangieren" in die Stellung "Fahrt" entsperrbar und die Steuerstange (28) in die Stellung "Fahrt" zurückschiebbar ist.

4. Kombiventil (1) nach mindestens einem der Ansprüche 1 bis 3, **dadurch gekennzeichnet, dass** der im Notbremskolben (3) aufgehängte Doppelventilkörper (14) durchbrochen ausgebildet ist, dass ein Rückführkolben (42) vorgesehen ist, der eine durch den durchbrochenen Doppelventilkörper (14) hindurchreichende Kolbenstange (45) trägt, die die Steuerstange (28) aus der Stellung "Rangieren" in die Stellung "Fahrt" zurückführt, wenn der Rückführkolben (42) pneumatisch beaufschlagt wird.

5. Kombiventil (1) nach mindestens einem der Ansprüche 1 bis 4, **dadurch gekennzeichnet, dass** koaxial zum Notbremskolben (3) im Gehäuse (2) ein weiterer hohler Doppelventilkörper (49) federnd und dichtend aufgehängt ist, der mit einem gehäuseseitigen Ventilsitz (50) ein Durchlassventil (49, 50) für Vorratsluft zu einem Relaisventil (37) zwecks Beaufschlagung des Betriebsbremsteils (26) des Kombizylinders (25) und separater Betriebsbremszylinder (47) bildet.

6. Kombiventil (1) nach Anspruch 5, **dadurch gekennzeichnet, dass** die Bremsleitung (8) durch den hohlen Doppelventilkörper (49) hindurchgeführt ist.

7. Kombiventil (1) nach mindestens einem der Ansprüche 1 bis 6, **dadurch gekennzeichnet, dass** an das Gehäuse (2) des Kombiventils (1) ein Rangierventil (54) für den abgekuppelten Zustand des Anhängefahrzeugs mit paralleler Achsanordnung angeflanscht ist.

8. Kombiventil (1) nach Anspruch 1, **dadurch gekennzeichnet, dass** der Notbremskolben (3) als Differentialkolben ausgebildet ist.

## Claims

1. Combined valve for trailer vehicles having a parking brake system with combined spring-type brake actuators (25), including a housing (2) and a emergency piston (3) being sealingly and glidingly guided and being supported by a grading spring (20) and carrying a spring biased double valve body (14), the double valve body and an inlet seat (17) forming an inlet valve (14, 17), the double valve body and an outlet seat (30) forming an outlet valve (14, 30), the emergency piston (3) on its side not facing the grading spring (20) separating an emergency chamber (6) in the housing (20), the emergency chamber being connectable with the emergency line (8), and including an actuation unit for the functions DRIVE and PARKING of the trailer vehicle, **characterized, in that** the outlet seat (30) is arranged on a control rod (28) to aerate or vent by arbitration the combined spring-type brake actuators (25), and the control rod being a substantial part of the actuation unit is glidingly and sealingly guided in the housing (2) in a coaxial arrangement with respect to the emergency piston (3).

2. Combined valve of claim 1, **characterized, in that** the control rod (28) is arranged to be shiftable in axial direction to take at least two positions, the first position being assigned to DRIVE with the parking brake system being released and the second position being assigned to PARKING with the parking brake system being effective, and at least one locking arrangement (31) is provided to block each of the two positions.

3. Combined valve of claim 2, **characterized, in that** the locking arrangement (31) is designed to be deblockable by a manual reshifting actuation and/or by pressurized air in the emergency line (8) after the coupling action of the trailer vehicle from the position MANOEUVERING in the position DRIVE and the control rod (28) to be reshiftable in the position DRIVE.

4. Combined valve of at least one of the claims 1 to 3, **characterized, in that** the double valve body (14) being suspended in the emergency piston (3) is designed to be hollow, that a return piston (42) is provided having a piston rod (45) extending through the hollow double valve body (14), the piston rod (45) causing the control rod (28) to return from the position MANOEUVERING in the position DRIVE due to an aeration action of the return piston (42).

5. Combined valve of at least one of the claims 1 to 4, **characterized, in that** a further hollow double valve body (49) is glidingly and sealingly suspended in the housing (2) with coaxial relation, and that the double valve body and a fix valve seat (50) form a valve (49, 50) controlling pressurized air from the reservoir to a relay valve (37) to actuate the service brake part (26) of the combined spring-type brake actuator (25) and separate service brake cylinders (47).

6. Combined valve of claim 5, **characterized, in that** the service line (36) extends through the hollow double valve body (49).

7. Combined valve of at least one of the claims 1 to 6, **characterized, in that** to move the trailer vehicle in the decoupled state a maneuvering valve (54) is flanged to the housing (2) of the combined valve (1) having an axis to be arranged in parallel to the axis of the combined valve.

8. Combined valve of claim 1, characterized, the emergency piston (3) is designed to be a differential piston.

## Revendications

1. Soupape combinée (1) pour remorques de véhicule avec un frein de stationnement comportant un cylindre combiné (25), avec un boîtier (2) et un piston de frein de secours (3) guidé à l'intérieur de manière étanche et glissant, lequel est soutenu sur un ressort d'échelonnement (20) et dans lequel est suspendu de manière élastique un corps à soupape double (14) qui forme avec un siège de soupape d'admission (17) une soupape d'admission (14, 17) et avec un siège de soupape d'échappement (30) une soupape d'échappement (40, 30), le piston de frein de secours (3) divisant, sur son côté opposé au ressort d'échelonnement, dans le boîtier (2), une chambre de frein de secours (6) pouvant être raccordée à la conduite de réserve (8), et avec un dispositif d'actionnement disposé sur la soupape combinée (1) pour les fonctions « marche » et « stationnement » de la remorque de véhicule, **caractérisée en ce que** le siège de soupape d'échappement (30) est disposé, pour l'arrivée et la purge d'air volontaires du cylindre combiné (25), sur une tige de commande (28) construite à la manière d'une soupape, laquelle, en tant que partie constitutive essentielle du dispositif d'actionnement, est guidée coulissante et de manière étanche dans le boîtier (2), coaxialement au piston de frein de secours (3).

2. Soupape combinée (1) selon la revendication 1, **caractérisée en ce que** la tige de commande (28) est disposée de manière à pouvoir coulisser axialement dans au moins deux positions, dont la première position avec frein de stationnement desserré est associée à l'état « marche » et la deuxième position avec frein de stationnement engagé est associée à l'état « stationnement », au moins un dispositif de verrouillage (31) étant prévu pour assurer le maintien de chacune des deux positions.

3. Soupape combinée (1) selon la revendication 2, **caractérisée en ce que** le dispositif de verrouillage (31) peut être déverrouillé, après actionnement manuel et/ou par la pression pneumatique dans la conduite de réserve (8), après nouvel attelage, de la position « manoeuvre » dans la position « marche », et la tige de commande (28) peut être repoussée dans la position « marche ».

4. Soupape combinée (1) selon l'une au moins des revendications 1 à 3, **caractérisée en ce que** le corps à soupape double (14), suspendu dans le piston de frein de secours (3), est réalisé percé de part en part, **en ce qu'**il est prévu un piston de rappel (42) qui porte une tige de piston (45), traversant le corps à soupape double (14) percé de part en part, qui replace la tige de commande (28) de la position « manoeuvre » dans la position « marche », lorsque le piston de rappel (42) est sollicité pneumatiquement.

5. Soupape combinée (1) selon l'une au moins des revendications 1 à 4, **caractérisée en ce que** coaxialement au piston de frein de secours (3) est suspendu de manière élastique et étanche dans le boîtier (2), un autre corps de soupape double (49) creux qui forme, avec un siège de soupape (50) côté boîtier, une soupape de passage (49, 50) pour l'air de réserve, vers une soupape de relais (37), afin d'agir sur la partie de frein de service (26) du cylindre combiné (25) et de cylindres de frein de service (47) séparés.

6. Soupape combinée (1) selon la revendication 5, **caractérisée en ce que** la conduite de réserve (8) est guidée à travers le corps de soupape double (49) creux.

7. Soupape combinée (1) selon l'une au moins des revendications 1 à 6, **caractérisée en ce que** sur le boîtier (2) de la soupape combinée (1) est bridée une soupape de manoeuvre (54) pour l'état attelé de la remorque, avec disposition parallèle des axes.

8. Soupape combinée (1) selon la revendication 1, **caractérisée en ce que** le piston de frein de secours (3) est réalisé comme piston différentiel.
